# FASCICULE DE BREVET EUROPEEN

(11) **EP 0 782 242 B1**
(45) Date de publication et mention de la délivrance du brevet: **15.03.2000**
(21) Numéro de dépôt: 96120327.0
(22) Date de dépôt: 18.12.1996
(51) Int. Cl.: H02K 16/02, G04C 3/14

(54) **Transducteur électromécanique multirotor et procédé de commande d'un tel transducteur**
Elektromechanischer Wandler mit mehreren Rotoren und Steuerverfahren dafür
Multi-rotor electromechanical transducer and control method thereof

(30) Priorité: 28.12.1995 FR 9515637
(43) Date de publication de la demande: 02.07.1997
(73) Titulaire: Eta SA Fabriques d'Ebauches, 2540 Grenchen (CH)
(72) Inventeur: Taghezout, Daho, 1110 Morges (CH)
(74) Mandataire: Balsters, Robert

(56) Documents cités:
- EP-A- 0 092 521
- EP-A- 0 143 227
- EP-A- 0 217 164
- EP-A- 0 698 957
- PATENT ABSTRACTS OF JAPAN vol. 009, no. 258 (E-350), 16 Octobre 1985 & JP 60 106355 A (SEIKO DENSHI KOGYO KK), 11 Juin 1985,

## Description

La présente invention concerne un transducteur électromécanique comprenant un seul stator et plusieurs rotors pouvant être utilisés, par exemple, pour entraîner les divers indicateurs d'une pièce d'horlogerie tels que les indicateurs de l'heure courante, de la date, du jour de la semaine, d'un temps chronométré, d'une heure de réveil, etc.

Un tel transducteur est connu du document EP-A-0 092 521.

Un but de la présente invention est de proposer un tel transducteur dont les divers rotors peuvent être commandés indépendamment les uns des autres et de manière qu'ils tournent sélectivement dans l'un ou l'autre de leurs deux sens de rotation tout en ayant une structure compacte et relativement peu onéreuse.

Ce but est atteint par les transducteurs faisant l'objet des revendications indépendantes 1, 9, 10 et 12.

En particulier, deux pôles statoriques, entourant partiellement une quelconque des ouvertures prévues pour les rotors, sont reliés directement aux premières extrémités de deux parties transversales formant des noyaux entourés respectivement par deux bobines et un troisième pôle statorique entourant également partiellement cette ouverture est relié directement à une partie transversale qui ne porte pas de bobine et qui est relié magnétiquement aux deuxièmes extrémités des deux parties transversales portant des bobines.

Un autre but de la présente invention est de proposer un procédé permettant de commander un tel transducteur de manière que ses divers rotors tournent indépendamment les uns des autres, sélectivement dans l'un ou l'autre de leurs deux sens de rotation.

Ce but est atteint par les étapes du procédé de commande faisant l'objet de la revendication 7 qui est expliqué en détails dans la description de la présente invention.

D'autres buts et avantages de la présente invention seront rendus évidents par la description de quelques unes de ses formes d'exécution qui va être faite ci-dessous. Ces formes d'exécution, qui ne seront décrites qu'à titre d'exemples non limitatifs, sont représentées schématiquement dans le dessin annexé dans lequel :
- La figure 1 représente une première forme d'exécution du transducteur selon l'invention;
- les figures 2 à 4 illustrent le fonctionnement du transducteur de la figure 1;
- les figures 5 et 6 représentent deux autres formes d'exécution du transducteur selon l'invention; et
- la figure 7 illustre le fonctionnement du transducteur de la figure 6.

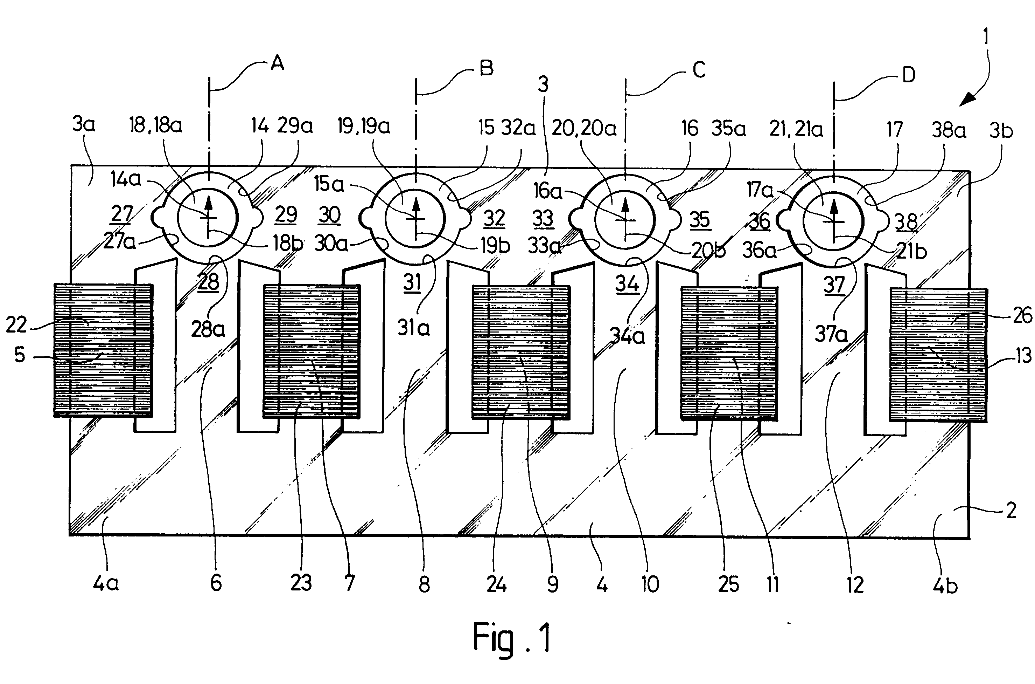

Dans sa forme d'exécution représentée à la figure 1, le transducteur électromécanique de la présente invention, qui est désigné par la référence générale 1, comporte un stator, quatre rotors et cinq bobines.

Le stator, qui est désigné par la référence 2, comporte deux parties principales 3 et 4 ayant chacune une première extrémité 3a, 4a, et une deuxième extrémité 3b, 4b.

Par analogie, on appellera première extrémité du stator 2 celle où se trouvent les premières extrémités 3a et 4a des parties principales 3 et 4 et deuxième extrémité du stator 2 celle où se trouvent les deuxièmes extrémités 3b et 4b de ces parties principales 3 et 4.

Le stator 2 comporte en outre neuf parties transversales 5 à 13 adjacentes les unes aux autres et ayant chacune une première et une deuxième extrémité qui sont respectivement reliées à la première partie principale 3 et à la deuxième partie principale 4. Les premières extrémités 3a et 4a, et les deuxièmes extrémités 3b et 4b de ces deux parties principales 3 et 4 sont respectivement reliées par les parties transversales 5 et 13.

Il est important de noter que les parties 3 et 4, d'une part, et les parties 5 à 13 d'autre part ne sont respectivement qualifiées de principales et de transversales que pour les distinguer les unes des autres et pour simplifier la présente description. Comme cela sera rendu évident par la suite de cette description, chacune de ces parties, quelle que soit sa qualification, est tout aussi importante et indispensable à la constitution et au fonctionnement du transducteur 1 que n'importe laquelle des autres parties.

Toujours pour simplifier la présente description, on attribuera un rang à chacune des parties transversales 5 à 13, en commençant arbitrairement par la partie transversale 5 qui est le plus proche de la première extrémité du stator 2 et en suivant l'ordre dans lequel ces parties transversales sont disposées dans ce stator 2. Le rang un est ainsi attribué à la partie transversale 5, le rang deux à la partie transversale 6, et ainsi de suite jusqu'à la partie transversale 13 qui est la plus proche de la deuxième extrémité du stator 2 et à laquelle le rang neuf est attribué. On pourra ainsi distinguer les parties transversales de rang impair, c'est à dire celles qui sont désignées par les références 5, 7, 9, 11 et 13, et les parties transversales de rang pair, c est à dire celles qui sont désignées par les références 6, 8, 10 et 12.

Il faut noter que cette répartition en parties transversales de rang impair et de rang pair reste inchangée si l'on attribue le rang un à la partie transversale 13 et le rang neuf à la partie transversale 5, puisque le nombre de ces parties transversales 5 à 13 est impair.

Dans le présent exemple, le stator 2 est percé de quatre ouvertures 14 à 17 qui sont toutes ménagées dans la partie principale 3, chacune dans le prolongement de l'une des parties transversales de rang pair 6, 8, 10 et 12. Les ouvertures 14 à 17 ont la forme générale de cylindres circulaires ayant respectivement des axes centraux 14a, 15a, 16a et 17a.

Le transducteur 1 comporte encore quatre rotors 18 à 21 qui traversent chacun l'une des ouvertures 14 à 17. Chacun de ces rotors 18 à 21 est mobile en rotation autour d'un axe qui est confondu avec celui de l'ouverture 14 à 17 qu'il traverse et qui sera désigné par la même référence que ce dernier.

Les rotors 18 à 21 ne seront pas décrits en détail car ils peuvent être tout à fait semblables aux rotors des moteurs pas à pas bien connus qui sont notamment utilisés dans les pièces d'horlogerie électroniques pour entraîner, par exemple, les aiguilles d'affichage de l'heure. On mentionnera simplement que chacun de ces rotors 18 à 21 comporte un aimant permanent bipolaire à aimantation radiale qui est situé dans l'ouverture 14 à 17 traversée par ce rotor. Ces aimants permanents sont seuls représentés dans la figure 1 où ils sont respectivement désignés par les références 18a à 21a. Les axes d'aimantation des aimants 18a à 21a, qui sont perpendiculaires aux axes de rotation respectifs 14a à 17a, sont respectivement désignés par les référence 18b à 21b et sont symbolisés par des flèches en traits pleins.

Le transducteur 1 comporte encore cinq bobines 22 à 26 qui entourent chacune l'une des parties transversales de rang impair 5, 7, 9, 11 et 13 du stator 2 et qui sont reliées, par des connexions non représentées, à un circuit électronique de commande du transducteur 1, également non représenté, dont le fonctionnement sera décrit plus loin.

L'homme du métier comprendra facilement que les parties transversales de rang pair 6, 8, 10 et 12 ne forment de préférence qu'une seule pièce avec les parties principales 3 et 4, et que cette pièce est réalisée dans un matériau à grande perméabilité magnétique tel que l'un de ceux qui sont couramment utilisés pour fabriquer le stator des moteurs pas à pas classiques.

L'homme de métier comprendra aussi facilement que les parties transversales de rang impair 5, 7, 9, 11 et 13, qui constituent respectivement les noyaux des bobines 22 à 26, sont de préférence des pièces rapportées sur le reste du stator 2 et reliées magnétiquement aux parties principales 3 et 4 par des moyens de fixation, tels que des vis ou des rivets, non représentés.

Pour une raison qui sera rendue évidente plus loin, les deux portions de la partie principale 3 et la portion de l'une des parties transversales 6, 8, 10 et 12 qui entourent chacune des ouvertures 14 et 17 seront appelées pôles statoriques, et les extrémités de ces pôles statoriques faisant partie de la paroi interne de ces ouvertures 14 à 17 seront appelées épanouissements polaires. Les pôles statoriques entourant les ouvertures 14 à 17 seront respectivement désignés par les références 27 à 29, 30 à 32, 33 à 35 et 36 à 38, les pôles statoriques 28, 31, 34 et 37 étant respectivement des portions des parties transversales 6, 8, 10 et 12, et les autres pôles statoriques étant tous des portions de la partie principale 3. Les épanouissements polaires formés par les extrémités des pôles statoriques 27 à 38 seront respectivement désignés par les références 27a à 38a.

A nouveau dans l'unique but de simplifier la présente description, les pôles statoriques qui sont des portions de la partie principale 3 ainsi que les épanouissements polaires qui les terminent seront qualifiés de principaux. De même, les pôles statoriques qui sont des portions des parties transversales de rang pair ainsi que les épanouissements polaires qui les terminent seront qualifiés de transversaux.

Les dimensions de la partie principale 3 et des parties transversales de rang pair 6, 8, 10 et 12, ainsi que la disposition relative de ces diverses parties et des ouvertures 14 à 17 sont choisies de manière que les trois pôles statoriques qui entourent chacune de ces ouvertures soient séparés deux à deux par des zones de section suffisamment faible pour que leur réluctance soit beaucoup plus élevée que celle des autres parties du stator 2 de manière à isoler magnétiquement lesdits trois pôles statoriques. De telles zones à réluctance élevée sont couramment appelées isthmes.

De plus, ces dimensions et cette disposition sont choisies de manière que les deux épanouissements polaires principaux qui entourent partiellement chaque ouverture 14 à 17 soient symétriques l'un de l'autre par rapport à un plan contenant l'axe 14a à 17a de cette ouverture et passant par le milieu de l'épanouissement polaire transversal qui entoure aussi partiellement cette même ouverture, et de manière que cet épanouissement polaire transversal soit lui-même symétrique par rapport à ce même plan. Les quatre plans de symétrie des ouvertures 14 à 17 sont respectivement désignés par les références A à D, et leurs traces dans le plan de la figure 1 sont partiellement représentées par des lignes en traits mixtes.

On voit que chaque pôle statorique principal est relié directement à une première extrémité de l'une des parties transversales qui constituent les noyaux des bobines 22 à 26, c'est à dire les parties transversales de rang impair dans l'exemple de la figure 1.

En outre, tous les pôles statoriques transversaux sont reliés directement à une première extrémité de l'une des parties transversales qui ne portent pas de bobine, c'est à dire les parties transversales de rang pair dans l'exemple de la figure 1.

Le transducteur 1 comporte encore des moyens de positionnement des rotors 18 à 21, qui sont agencés de manière que chacun de ces rotors ait deux positions de repos, ou positions d'énergie minimale, et que ces deux positions soient celles où les axes d'aimantation 18b à 21b des aimants 18a à 21a sont respectivement situés dans les plans de symétrie A, B, C ou D définis ci-dessus.

En d'autres termes, les moyens de positionnement de chacun des rotors 18 à 21 sont agencés de manière que, dans les deux positions de repos de ce rotor, la direction de l'axe d'aimantation de son aimant passe par le milieu de l'épanouissement polaire situé à l'extrémité du seul pôle statorique qui n'est pas relié directement au noyau d'une bobine parmi les trois pôles statoriques entourant l'ouverture dans laquelle ce rotor est disposé.

Dans le présent exemple, les moyens de positionnement de chacun des rotors 18 à 21 sont constitués par deux encoches ménagées chacune dans l'un des épanouissements polaires principaux qui entourent partiellement ce rotor, ces deux encoches étant en outre symétriques l'une de l'autre par rapport au plan de symétrie A, B, C ou D respectif.

Dans la figure 1, les aimants 18a à 21a des rotors 18 à 21 ont tous été représentés dans celle des deux positions de repos de ces rotors où leur axe d'aimantation 18b à 21b est orienté vers l'isthme diamétralement opposé à l'épanouissement polaire transversal 28a, 31a, 34a ou 37a respectif. Cette position de repos des rotors 18 à 21 sera appelée arbitrairement première position de repos. L'autre position de repos des rotors 18 à 21, c'est à dire celle où l'axe d'aimantation 18b à 21b de leur aimant 18a à 21a est orienté vers le milieu de l'épanouissement polaire transversal 28a, 31a, 34a ou 37a respectif, sera alors évidemment appelée deuxième position de repos.

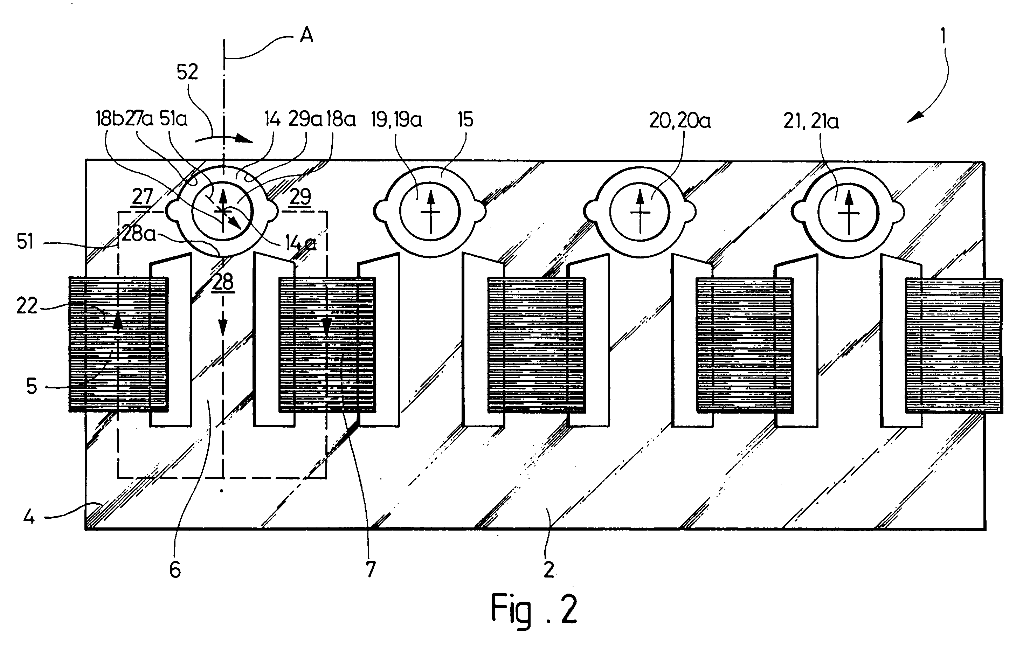

Le fonctionnement du transducteur 1 va être décrit maintenant à l'aide des figure 2 à 4. Le circuit électronique de commande, non représenté, du transducteur 1 est agencé de manière à relier les bobines 22 à 26, ou seulement certaines d'entre elles, à une source d'énergie électrique, également non représentée, pendant un temps limité, comme cela sera décrit en détail plus loin. En d'autres termes, le circuit de commande du transducteur 1 est agencé de manière à appliquer à ces bobines 22 à 26 des impulsions qui seront appelées de manière générale impulsions de commande.

Comme cela sera expliqué en détail plus loin, certaines de ces impulsions de commande sont destinées à provoquer la rotation de l'un ou l'autre des rotors 18 à 21 et seront appelées impulsions motrices. De même, d'autres de ces impulsions de commande sont destinées à compenser, si nécessaire, un effet non désiré des impulsions motrices et seront appelées impulsions de compensation.

En outre, pour éviter des répétitions inutiles, on admettra que l'énergie électrique fournie à l'une ou l'autre des bobines 22 à 26 pendant une impulsion motrice ou une impulsion de compensation est suffisante pour que l'effet recherché soit obtenu.

Le courant qui passe dans une bobine en réponse à une impulsion de commande appliquée à celle-ci induit dans la partie transversale du stator 2 qui constitue le noyau de cette bobine un champ magnétique dont le sens dépend évidemment du sens de ce courant et donc de la polarité de cette impulsion de commande. Dans la suite de cette description, on qualifiera arbitrairement de positive une impulsion de commande dont la polarité est telle que, lorsqu'elle est appliquée à une bobine, le champ magnétique induit dans le noyau de celle-ci a un sens qui va de l'extrémité de ce noyau qui est reliée à la partie principale 4 vers l'autre extrémité de ce noyau, c'est à dire celle qui est reliée à la partie principale 3. Une impulsion de commande en réponse à laquelle le champ magnétique a le sens inverse de celui qui vient d'être défini sera qualifiée de négative.

Pour simplifier la description qui va suivre, on admettra que le circuit de commande du transducteur 1 est en outre agencé de manière que les courants qui traversent les bobines 22 à 26 en réponse aux impulsions de commande qui leur sont appliquées soient pratiquement constants pendant toute la durée de ces impulsions. L'homme du métier verra cependant que ceci n'est pas une condition pour que le transducteur 1 fonctionne correctement et que le circuit de commande de ce dernier peut tout aussi bien être agencé, par exemple, de manière que les tensions appliquées aux bobines 22 à 26 soient constantes pendant toute la durée des impulsions de commande. D'ailleurs, l'homme du métier connaît divers procédés d'alimentation de transducteurs, notamment du type horloger, qui présentent divers avantages, par exemple une consommation minimale, et qui peuvent également être mis en oeuvre pour commander un transducteur selon la présente invention.

Un courant circulant dans la bobine 22 induit dans la partie transversale 5 un champ magnétique désigné par la référence 51, dont la résultante dans le stator 2 est représentée schématiquement dans la figure 2 par une ligne en traits interrompus.

Le champ magnétique 51 parcourt un circuit fermé comportant, en plus de la partie transversale 5, le pôle statorique 27, l'ouverture 14 et donc l'aimant 18a puis, en parallèle, le pôle statorique 28 et la partie transversale 6 d'une part, et le pôle statorique 29 et la partie transversale 7 d'autre part, et finalement une portion de la partie principale 4.

La résultante du champ 51 dans l'ouverture 14 et dans l'aimant 18a est désignée par la référence 51a. Cette résultante 51a du champ 51 fait avec le plan de symétrie A de l'ouverture 14 un angle obtus dont la valeur dépend de celle des angles au centre sur lesquels s'étendent les épanouissements polaires 27a et 29a d'une part et 28a d'autre part. En pratique, cet angle obtus est compris entre 110° environ et 160° environ, sa valeur exacte étant choisie, comme dans les moteurs pas à pas classiques, en fonction des caractéristiques que l'on désire donner au couple moteur fourni par le rotor 18 lorsque le transducteur 1 fonctionne de la manière qui sera décrite plus loin.

Il faut noter que la réluctance magnétique de l'ouverture 15 est considérablement plus élevée que celle de la partie transversale 7. Il en découle que le champ magnétique qui traverse cette ouverture 15 en réponse à un courant circulant dans la bobine 22 est suffisamment faible pour être négligeable.

On admettra pour commencer que le rotor 18 est dans sa première position de repos, comme cela est représenté dans les figures 1 et 2.

Si le circuit de commande du transducteur 1 applique alors à la bobine 22 une impulsion motrice positive, le champ magnétique 51 a le sens indiqué par les flèches portées par la ligne en traits interrompus qui le symbolise.

On voit que, dans ces conditions, l'interaction dans l'ouverture 14 du champ 51 et du champ de l'aimant 18a soumet ce dernier, et donc le rotor 18, à un couple qui fait tourner ce rotor 18 dans le sens de la flèche 52, c'est à dire le sens généralement qualifié de négatif. A la fin de cette impulsion motrice, le rotor 18 atteint donc sa deuxième position de repos après avoir tourné de 180°.

On voit également, sans qu'il soit nécessaire de le décrire en détail, que si le circuit de commande du transducteur 1 applique alors à la bobine 22 une autre impulsion motrice, ayant la polarité inverse de la précédente, c'est à dire une impulsion motrice négative, le rotor 18 tourne à nouveau de 180° dans le sens négatif et se retrouve dans sa première position de repos après la fin de cette impulsion motrice négative.

Des impulsions motrices de polarités alternées appliquées à la bobine 22 provoquent donc la rotation du rotor 18 dans le sens négatif par pas de 180° successifs.

Comme cela a été mentionné ci-dessus, le champ magnétique qui traverse l'ouverture 15 et l'aimant 19a en réponse aux impulsions de commande appliquées à la bobine 22 est négligeable. Les impulsions motrices appliquées à la bobine 22 pour faire tourner le rotor 18 dans le sens négatif comme cela a été expliqué ci-dessus n'ont donc aucun effet sur le rotor 19 et, à plus forte raison, sur les rotors 20 et 21.

En résumé, on voit que des impulsions motrices de polarités alternées appliquées uniquement à la bobine 22 provoquent la rotation du rotor 18, et seulement de celui-ci, dans le sens négatif.

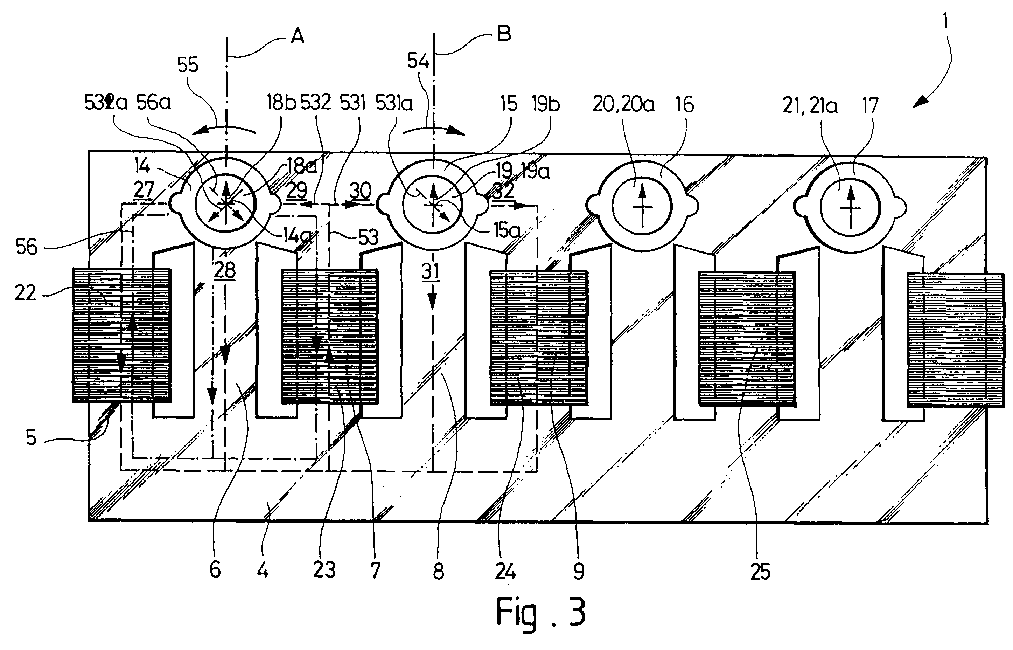

Un courant circulant dans la bobine 23 induit dans la partie transversale 7 un champ magnétique désigné par la référence 53, dont la résultante dans le stator 2 est symbolisée dans la figure 3 par une ligne en traits interrompus.

Une première partie du champ 53, désignée par la référence 531, parcourt un circuit fermé comportant, en plus de la partie transversale 7, le pôle statorique 30, l'ouverture 15 et donc l'aimant 19a puis, en parallèle, le pôle statorique 31 et la partie transversale 8 d'une part, et le pôle statorique 32 et la partie transversale 9 d'autre part, et finalement une portion de la partie principale 4.

La résultante de cette première partie 531 du champ 53 dans l'ouverture 15, qui est désignée par la référence 531a, fait avec le plan de symétrie B un angle obtus dont la valeur est également comprise, en pratique, entre 110° environ et 160° environ.

Une deuxième partie du champ 53, désignée par la référence 532, parcourt un autre circuit fermé comportant, en plus de la partie transversale 7, le pôle statorique 29, l'ouverture 14 et donc l'aimant 18a puis, en parallèle, le pôle statorique 27 et la partie transversale 5 d'une part, et le pôle statorique 28 et la partie transversale 6 d'autre part, et finalement une portion de la partie principale 4.

La résultante de cette deuxième partie 532 du champ 53 dans l'ouverture 14, qui est désignée par la référence 532a, fait avec le plan de symétrie A un angle obtus symétrique, par rapport à ce plan A, de celui que fait la résultante 51a du champ 51 dans le cas illustré par la figure 2.

Il faut noter que les réluctances magnétiques des circuits respectivement parcourus par les parties 531 et 532 du champ 53 sont sensiblement égales, de sorte que ces deux parties 531 et 532 sont aussi sensiblement égales. Par contre, la réluctance de l'ouverture 16 est considérablement plus grande que celle de la partie transversale 9. Il en résulte que le champ magnétique qui traverse cette ouverture 9 en réponse à un courant circulant dans la bobine 23 est négligeable.

Lorsque le circuit de commande du transducteur 1 applique une impulsion motrice positive à la bobine 23, le champ magnétique 53 a le sens indiqué par les flèches portées par la ligne en traits interrompus qui le symbolise.

On voit que, si le rotor 19 est dans sa première position de repos au début de cette impulsion motrice positive, l'interaction dans l'ouverture 15 de la partie 531 du champ 53 et du champ de l'aimant 19a soumet ce dernier, et donc le rotor 19, à un couple qui fait tourner ce rotor 19 dans le sens de la flèche 54, c'est à dire à nouveau le sens négatif. A la fin de cette impulsion motrice, le rotor 19 atteint donc sa deuxième position de repos après avoir tourné de 180°.

On voit également que si le circuit de commande du transducteur 1 applique alors une impulsion motrice négative à la bobine 23, le rotor 19 tourne à nouveau dans le sens négatif et se retrouve dans sa première position de repos après la fin de cette impulsion motrice négative.

Des impulsions motrices de polarités alternées appliquées à la bobine 23 provoquent donc la rotation du rotor 19 dans le sens négatif, par pas de 180° successifs. En outre, ces impulsions motrices appliquées à la bobine 23 n'ont aucun effet sur le rotor 20, et à plus forte raison sur le rotor 21, puisque le champ magnétique qui traverse l'ouverture 16 en réponse à un courant circulant dans cette bobine 23 est très faible.

Comme on l'a vu ci-dessus, les deux parties 531 et 532 du champ 53 sont sensiblement égales. Si les impulsions motrices appliquées à la bobine 23 provoquent la rotation du rotor 19 comme cela vient d'être décrit, il est donc tout à fait possible, et même probable, que ces impulsions motrices provoquent également et simultanément une rotation du rotor 18. Cependant, la résultante 532a du champ 53 dans l'ouverture 14 est symétrique par rapport au plan A de la résultante 51a du champ 51 produit par un courant circulant dans la bobine 22 (voir la figure 2). Le couple auquel est soumis le rotor 18 en réponse aux impulsions motrices appliquées à la bobine 23 a donc le sens opposé de celui qu'il a lorsque des impulsions motrices sont appliquées à la bobine 22. Les impulsions motrices appliquées à la bobine 23 provoquent donc une rotation du rotor 18 dans le sens positif indiqué dans la figure 3 par la flèche 55.

Comme on l'a vu ci-dessus, un champ magnétique est induit dans la partie transversale 5 du stator 2 par un courant circulant dans la bobine 22. Ce champ est symbolisé dans la figure 3 par une ligne en traits mixtes, et il est désigné dans ce cas par la référence 56.

Le circuit parcouru par le champ 56 est évidemment identique à celui qui est parcouru par le champ 51 dans le cas de la figure 2 et ne sera donc pas décrit à nouveau ici. On mentionnera simplement que la résultante de ce champ 56 dans l'ouverture 14 et dans l'aimant 18a est désignée par la référence 56a.

Cette résultante 56a a évidemment la même direction que la résultante 51a du champ 51 de la figure 2, et cette direction est donc symétrique, par rapport au plan A, de celle de la résultante 532a du champ 53.

Si une impulsion motrice, par exemple positive, est appliquée à la bobine 23 pour faire tourner le rotor 19 de la manière décrite ci-dessus, et si une impulsion de commande, également positive, est appliquée simultanément à la bobine 22, les résultantes respectives 532a et 56a des champs 53 et 56 dans l'ouverture 14 ont des directions symétriques l'une de l'autre par rapport au plan A. En outre, ces résultantes 532a et 56a ont des sens opposés par rapport à une direction perpendiculaire à ce plan A. Il en résulte que si, en outre, les deux champs 532 et 56 ont des valeurs absolues égales, les couples qui résultent respectivement de l'interaction dans l'ouverture 14 du champ de l'aimant 18a avec ces champs 532 et 56 sont égaux en valeur absolue et de sens opposés. Ces deux couples s'annulent donc mutuellement, et le rotor 18 reste immobile quelle que soit la position qu'il occupe.

L'impulsion de commande appliquée dans ce cas à la bobine 22 est donc une impulsion de compensation qui compense l'effet sur le rotor 18 de l'impulsion motrice appliquée à la bobine 23 pour faire tourner le rotor 19.

Il est évident que lorsque le circuit de commande du transducteur 1 applique une impulsion motrice négative pour faire tourner le rotor 19 de sa deuxième à sa première position de repos, ce circuit de commande doit appliquer simultanément une impulsion de compensation négative à la bobine 22 pour empêcher toute rotation du rotor 18.

En résumé, pour faire tourner le rotor 19 dans le sens négatif, le circuit de commande du transducteur 1 applique des impulsions motrices de polarités alternées à la bobine 23. S'il est désiré en plus que ce rotor 19 soit le seul à tourner en réponse à ces impulsions motrices, le circuit de commande du transducteur 1 applique à la bobine 22 des impulsions de compensation ayant la même polarité que ces impulsions motrices, en synchronisme avec ces dernières. En d'autres termes, les impulsions de compensations appliquées à la bobine 22 sont en phase avec les impulsions motrices appliquées à la bobine 23.

A la lumière des explications données ci-dessus, l'homme du métier verra facilement, sans qu'il soit nécessaire de le décrire en détail, que pour faire tourner le rotor 20 dans le sens négatif, le circuit de commande du transducteur 1 applique des impulsions motrices de polarités alternées à la bobine 24. Ces impulsions motrices n'ont aucun effet sur le rotor 21. Par contre, ces impulsions motrices agissent sur le rotor 19 et tendent à le faire tourner dans le sens positif. Pour éviter cet effet, le circuit de commande du transducteur 1 doit appliquer à la bobine 23 des impulsions de compensation en phase avec ces impulsions motrices.

Mais ces impulsions de compensation appliquées à la bobine 23 agissent aussi sur le rotor 18 et tendent à le faire tourner également dans le sens positif. Pour éviter ce dernier effet, le circuit de commande du transducteur 1 doit appliquer à la bobine 22 d'autres impulsions de compensation en phase avec celles qui sont appliquées à la bobine 23, et donc également en phase avec les impulsions motrices appliquées à la bobine 24.

L'homme du métier verra également que pour faire tourner le rotor 21 dans le sens négatif, le circuit de commande du transducteur 1 applique à la bobine 25 des impulsions motrices de polarités alternées. En outre, si le rotor 21 doit être le seul à tourner, le circuit de commande du transducteur 1 applique aux bobines 22, 23 et 24 des impulsions de compensation en phase avec ces impulsions motrices.

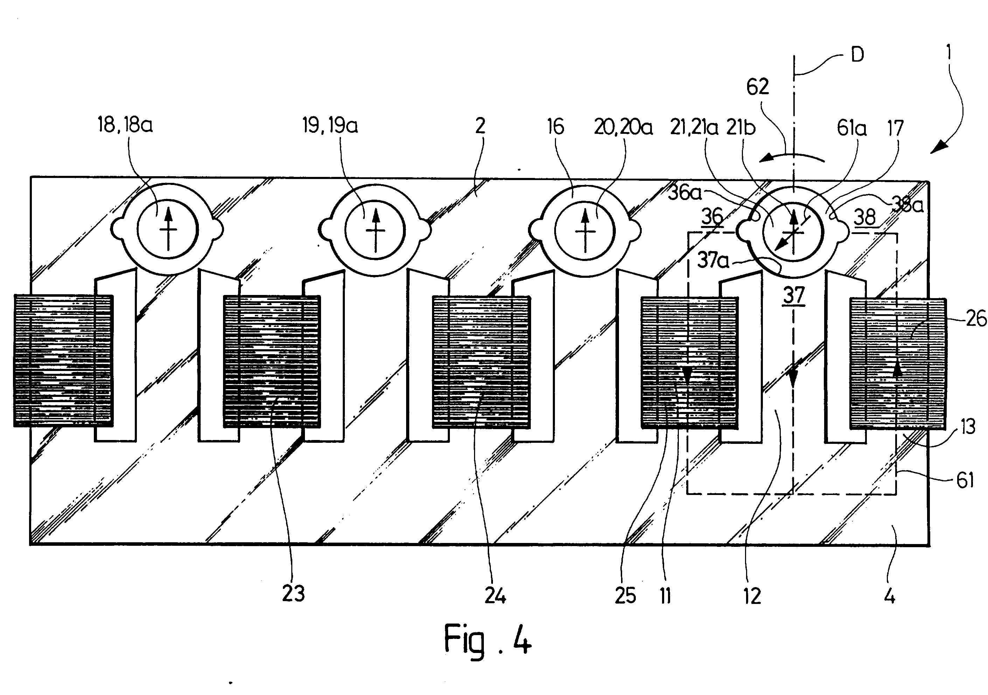

Un courant circulant dans la bobine 26 induit dans la partie transversale 13 un champ magnétique, désigné par la référence 61, dont la résultante est représentée schématiquement dans la figure 4 par une ligne en traits interrompus.

Le champ magnétique 61 parcourt un circuit fermé comportant, en plus de la partie transversale 13, le pôle statorique 38, l'ouverture 17 et donc l'aimant 21a puis, en parallèle, le pôle statorique 37 et la partie transversale 12 d'une part, et le pôle statorique 36 et la partie transversale 11 d'autre part, et finalement une portion de la partie principale 4.

La résultante du champ 61 dans l'ouverture 17 et dans l'aimant 21a est désignée par la référence 61a. Cette résultante 61a du champ 61 fait avec le plan de symétrie D de l'ouverture 17 un angle obtus dont la valeur dépend de celle des angles au centre sur lesquels s'étendent les épanouissements polaires 36a et 38a d'une part et 37a d'autre part.

Il faut noter que la direction de cette résultante 61a est symétrique par rapport au plan D de la direction de la résultante dans l'ouverture 17, non représentée dans la figure 4, du champ qui serait induit dans le stator 2 par un courant circulant dans la bobine 25.

Il faut également noter que la réluctance magnétique de l'ouverture 16 est considérablement plus élevée que celle de la partie transversale 11. Il en découle que le champ magnétique qui traverse cette ouverture 16 en réponse à un courant passant dans la bobine 26 est négligeable.

Lorsque le circuit de commande du transducteur 1 applique une impulsion motrice positive à la bobine 26, le champ magnétique 61 a le sens indiqué par les flèches portées par la ligne en traits interrompus qui le symbolise.

On voit que si le rotor 21 est alors dans sa première position de repos, l'interaction dans l'ouverture 17 du champ 61 et du champ de l'aimant 21a soumet ce dernier, et donc le rotor 21, à un couple qui fait tourner ce rotor 21 dans le sens de la flèche 62, c'est à dire le sens positif.

A la fin de cette impulsion motrice, le rotor 21 atteint donc sa deuxième position de repos après avoir tourné de 180° dans le sens positif.

On voit également que si le circuit de commande du transducteur 1 applique alors à la bobine 26 une impulsion motrice négative, le rotor 21 tourne à nouveau de 180° dans le sens positif et se retrouve dans sa première position de repos après la fin de cette impulsion motrice.

Des impulsions motrices de polarités alternées appliquées à la bobine 26 provoquent donc la rotation du rotor 21 dans le sens positif par pas de 180° successifs.

En outre, ces impulsions motrices appliquées à la bobine 26 n'ont aucun effet sur le rotor 20 ni, à plus forte raison, sur les rotors 18 et 19.

La manière de commander le transducteur 1 pour que les rotors 18 à 20 tournent dans le sens positif ne sera pas décrite en détail ici car elle se déduit facilement des explications données ci-dessus sur la manière de faire tourner ces rotors dans le sens négatif et sur la manière de faire tourner le rotor 21 dans le sens positif.

On mentionnera simplement que, pour faire tourner le rotor 20 dans le sens positif, le circuit de commande du transducteur 1 applique à la bobine 25 des impulsions motrices de polarités alternées. Si ce rotor 20 doit être le seul à tourner, le circuit de commande applique à la bobine 26 des impulsions de compensation en phase avec les impulsions motrices appliquées à la bobine 25.

De même, pour faire tourner le rotor 19 dans le sens positif, le circuit de commande applique à la bobine 24 des impulsions motrices de polarités alternées et, si ce rotor 19 doit être le seul à tourner, ce circuit de commande applique aux bobines 25 et 26 des impulsions de compensation en phase avec ces impulsions motrices.

Enfin, pour faire tourner le rotor 18 dans le sens positif, le circuit de commande applique à la bobine 23 des impulsions motrices de polarités alternées et, si ce rotor 18 doit être le seul à tourner, ce circuit de commande applique aux bobines 24, 25 et 26 des impulsions de compensation en phase avec ces impulsions motrices.

On remarquera que l'homme du métier, sur la base de l'enseignement précédent, est à même de concevoir diverses commandes du transducteur selon l'invention permettant à deux ou plusieurs rotors de tourner simultanément dans un sens déterminé.

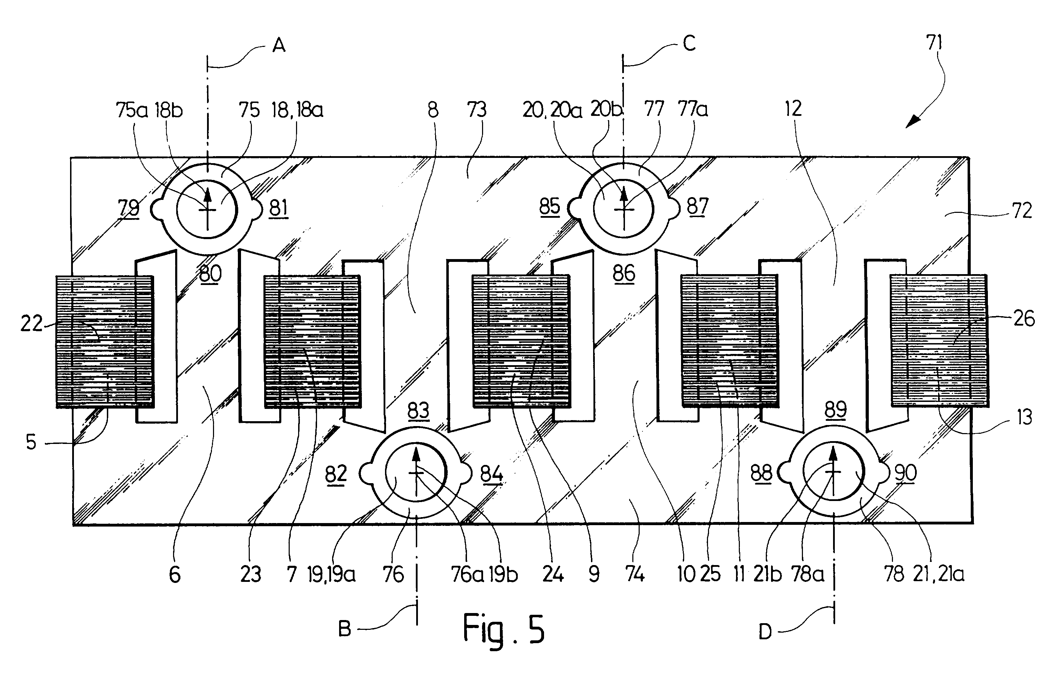

Dans sa forme d'exécution représentée à la figure 5, le transducteur électromécanique de la présente invention, désigné par la référence 71, comporte comme le transducteur 1 de la figure 1 un stator, désigné par la référence 72, quatre rotors et cinq bobines.

Le stator 72 comporte aussi deux parties principales, désignées par les référence 73 et 74, et neuf parties transversales. Ces dernières sont semblables aux parties transversales 5 à 13 du stator 2 de la figure 1 et sont désignées par les mêmes références.

En outre, les parties principales 73 et 74 d'une part et les parties transversales 5 à 13 d'autre part sont disposées et reliées les unes aux autres de la même manière que les parties correspondantes du stator 2 de la figure 1.

Le stator 72 est également percé de quatre ouvertures, désignées par les références 75 à 78, qui ont toutes la forme générale d'un cylindre circulaire. Les axes de ces cylindres sont désignés par les références 75a à 78a.

Seules les deux ouvertures 75 et 77 sont ménagées dans la première partie principale 73, les deux autres ouvertures 76 et 78 étant ménagées dans la deuxième partie principale 74.

Cependant, comme dans le cas de la figure 1, les quatre ouvertures 75 et 78 sont respectivement ménagées dans le prolongement des parties transversales de rang pair 6, 8, 10 et 12.

Le transducteur 71 comporte encore quatre rotors traversant chacun l'une de ouvertures 75 à 78 et qui sont mobiles en rotation autour des axes 75a à 78a de ces dernières. Ces rotors sont semblables aux rotors 18 à 21 du transducteur 1 de la figure 1 et sont désignés par les mêmes références que ces derniers.

En outre, comme dans la figure 1, seuls les aimants permanents 18a à 21a de ces rotors 18 à 21 sont visibles dans la figure 5, où les résultantes des champs qu'ils produisent ont également été symbolisées par des flèches en traits pleins désignées respectivement par les références 18b à 21b.

Le transducteur 71 comporte également cinq bobines semblables aux bobines 22 à 26 du transducteur 1, désignées par les mêmes références que ces dernières et entourant aussi chacune une des parties transversales de rang impair 5, 7, 9, 11 et 13.

Il est évident que, comme dans le stator 2 de la figure 1, ces parties transversales de rang impair, qui constituent les noyaux des bobines 22 à 26, sont également, de préférence, des pièces rapportées sur le reste du stator 72, alors que les parties transversales de rang pair 6, 8, 10 et 12 ne forment de préférence qu'une seule pièce avec les parties principales 73 et 74.

Comme dans le cas du transducteur 1 de la figure 1, chacune des ouvertures 75 à 78 est entourée par trois pôles statoriques désignés respectivement par les références 79 à 81, 82 à 84, 85 à 87, et 88 à 90. Les pôles statoriques 79, 81, 85 et 87 sont constitués par des portions de la partie principale 73, les pôles statoriques 82, 84, 88 et 90 par des portions de la partie principale 74, et les pôles statoriques 80, 83, 86 et 89 par des portions des parties transversales de rang pair 6, 8, 10 et respectivement 12.

Le transducteur 71 ne sera pas décrit plus en détail car sa structure est tout à fait analogue à celle du transducteur 1 de la figure 1, à l'exception bien entendu des éléments particuliers mentionnés ci-dessus.

On relèvera simplement que le transducteur 71 comporte également des moyens de positionnement des rotors 18 à 21, et que ces moyens sont également agencés de manière que les axes d'aimantation 18b à 21b des aimants 18a à 21a soient respectivement situés dans les plans de symétrie A à D des ouvertures 75 à 78.

Le fonctionnement du transducteur 71 ne sera pas non plus décrit en détail car il se déduit aisément du fonctionnement, décrit ci-dessus, du transducteur 1 de la figure 1.

On relèvera simplement que, comme dans le cas du transducteur 1 de la figure 1, des impulsions motrices appliquées aux bobines 22, 23, 24 ou 25 du transducteur 71 provoquent respectivement la rotation des rotors 18, 19, 20 et 21 dans un premier sens, et que des impulsions motrices appliquées aux bobines 23, 24, 25 ou 26 de ce transducteur 71 provoquent respectivement la rotation des rotors 18, 19, 20 et 21 dans un deuxième sens. Ce premier et ce deuxième sens des rotors 18 et 20 sont respectivement le sens négatif et le sens positif, comme dans le cas du transducteur 1. Par contre, pour les rotors 19 et 21, ce premier et ce deuxième sens sont respectivement le sens positif et le sens négatif, c'est à dire le contraire de ce qui se passe dans le cas du transducteur 1 de la figure 1.

Il est en outre évident que des impulsions de compensation doivent être appliquées à certaines bobines, de la même manière que dans le cas du transducteur 1 de la figure 1, pour éviter que des impulsions motrices destinées à faire tourner un rotor ne fassent également tourner un autre rotor.

L'homme du métier verra aisément que, dans des variantes du transducteur 71, les ouvertures ménagées dans le stator peuvent être réparties d'une manière différente de celle qui a été représentée dans la figure 5.

Ainsi, par exemple, deux ouvertures peuvent être ménagées dans l'une des parties principales dans le prolongement des deux premières parties transversales de rang pair 6 et 8, les deux autres ouvertures étant ménagées dans l'autre partie principale en regard des deux dernières parties transversales de rang pair 10 et 12.

Toujours par exemple, deux ouvertures peuvent être ménagées dans l'une des parties principales dans le prolongement de la première et de la dernière partie transversale de rang pair 6 et 12, les deux autres ouvertures étant alors ménagées dans l'autre partie principale dans le prolongement de la deuxième et de la troisième partie transversale 8 et 10.

De même, trois ouvertures peuvent être ménagées dans l'une des parties principales et la quatrième ouverture dans l'autre partie principale.

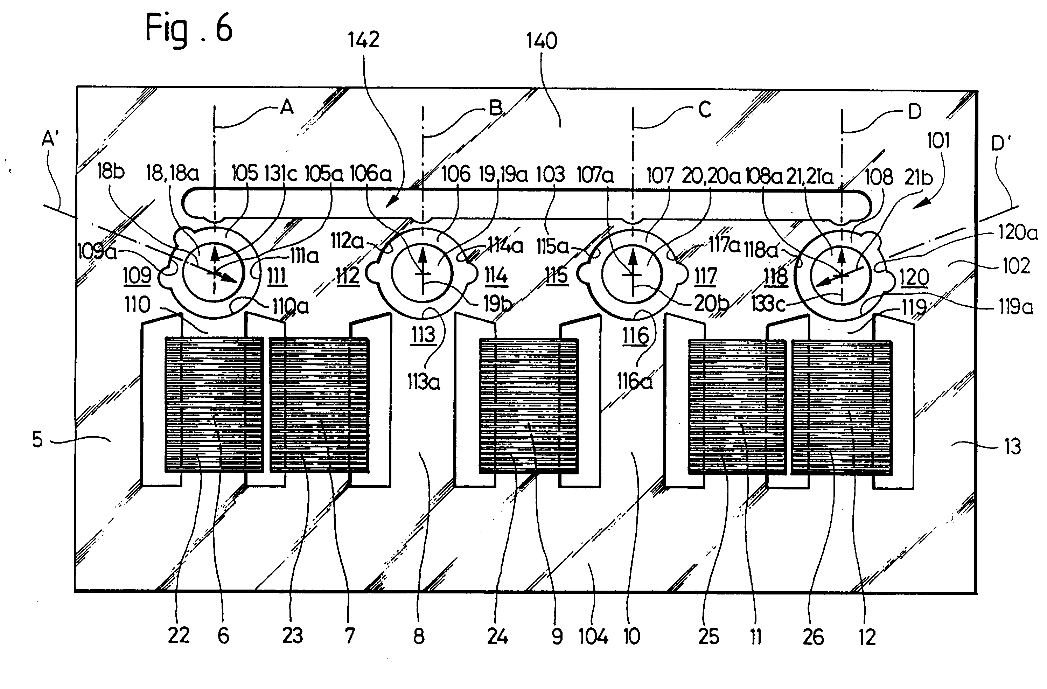

Dans sa forme d'exécution représentée schématiquement à la figure 6, le transducteur électromécanique de la présente invention, désigné par la référence 101, comporte également un stator, désigné par 102, quatre rotors et cinq bobines.

Le stator 102 comporte aussi deux parties principales 103 et 104 et neuf parties transversales semblables aux parties transversales 5 à 13 du transducteur 1 de la figure 1 et désignées par les mêmes références. Les parties principales 103 et 104 d'une part et ces parties transversales 5 à 13 d'autre part sont disposées et reliées les unes aux autres de la même manière que les parties correspondantes du stator 2 de la figure 1.

Le stator 102 est également percé de quatre ouvertures, désignées par les références 105 à 108, ayant toutes la forme générale de cylindres circulaires dont les axes sont respectivement désignés par les références 105a à 108a. Ces quatre ouvertures 105 à 108 sont toutes ménagées dans la partie principale 103, chacune dans le prolongement de l'une des parties transversales de rang pair 6, 8, 10 et 12.

Les quatre rotors du transducteur 101 sont semblables aux rotors 18 à 21 du transducteur 1 de la figure 1 et sont désignés par les mêmes références que ces derniers. Chacun de ces rotors 18 à 21 traverse l'une des ouvertures 105 à 108 dans laquelle il est mobile en rotation autour de l'axe 105a à 108a respectif.

Comme dans la figure 1, seuls les aimants permanents 18a à 21a de ces rotors 18 à 21 sont visibles dans la figure 6. Les résultantes des champs produits par chacun de ces aimants sont également symbolisées par des flèches en traits pleins désignées respectivement par les références 18b à 21b.

Les cinq bobines du transducteur 101 sont semblables aux bobines 22 à 26 du transducteur 1 et sont désignées par les mêmes références que ces dernières.

Toujours comme dans le transducteur 1, les bobines 23, 24 et 25 du transducteur 101 entourent chacune une des parties transversales de rang impair 7, 9 et, respectivement 11. Par contre, les bobines 22 et 26 entourent respectivement les parties transversales de rang pair 6 et 12.

Dans ce cas, les parties transversales 6, 7, 9, 11 et 12 qui constituent respectivement les noyau des bobines 22 à 26 sont évidemment de préférence des pièces rapportées sur le reste du stator 102, alors que les autres parties transversales 5, 8, 10 et 13 ne forment de préférence qu'une seule pièce avec les parties principales 103 et 104.

Les pôles statoriques 109 à 120 qui entourent trois par trois les ouvertures 105 à 108 et les épanouissements polaires 109a à 120a situés à leurs extrémités respectives ne seront pas décrits en détail ici car leur constitution et leur disposition sont tout à fait semblables à celles des pôles statoriques 27 à 38 et des épanouissements polaires 27a à 38a du stator 2 de la figure 1. Notamment, comme dans ce dernier, les trois pôles statoriques qui entourent chacune des ouvertures 105 à 108 sont aussi séparés deux à deux par des isthmes présentant une réluctance magnétique très élevée. Le stator 102 du mode de réalisation décrit à la figure 6 se distingue du stator de la figure 1 en particulier en ce que les deux pôles statoriques 109 et 120 sont reliés magnétiquement par une troisième partie principale 140, ce qui définit une ouverture 142 entre la première partie principale 103 et cette troisième partie principale 140. Ainsi, le stator 102 peut être étendu dans toutes les directions pour servir notamment au montage de divers éléments d'un dispositif auquel le transducteur selon l'invention est destiné.

En outre, les deux épanouissement polaires principaux qui entourent partiellement chacune des ouvertures 105 à 108 sont symétriques l'un de l'autre par rapport à un plan contenant l'axe 105a à 108a de cette ouverture et passant par le milieu de l'épanouissement polaire transversal qui entoure aussi partiellement cette même ouverture et qui est lui-même symétrique par rapport à ce plan. Ces quatre plans de symétrie sont désignés par les références A à D et leurs traces dans le plan de la figure 6 sont partiellement indiquées par des lignes en traits mixtes.

Le transducteur 101 comporte aussi des moyens de positionnement des rotors 18 à 21. Les deux encoches qui constituent les moyens de positionnement de chacun des rotors 19 et 20 sont symétriques l'une de l'autre par rapport au plan de symétrie B et, respectivement, C comme dans le transducteur 1 de la figure 1. Les axes d'aimantation 19b et 20b des aimants 19a et 20a de ces rotors 19 et 20 sont donc respectivement situés dans les plans B et C lorsque ces rotors 19 et 20 sont dans l'une ou l'autre de leurs positions de repos. Par analogie avec le cas illustré par la figure 1, on appellera arbitrairement première position de repos de ces rotors 19 et 20 celle dans laquelle les axes d'aimantation 19b et 20b sont dirigés vers l'isthme diamétralement opposé à l'épanouissement polaire transversal 113a et, respectivement, 116a. La deuxième position de repos des rotors 19 et 20 est évidemment celle où les axes d'aimantation 19b et 20b sont respectivement dirigés vers le milieu de ces épanouissements polaires 113a et 116a.

Les encoches qui constituent dans cet exemple les moyens de positionnement du rotor 18, par contre, sont symétrique l'une de l'autre par rapport à un plan qui contient l'axe 105a de l'ouverture 105 et qui passe par le milieu de l'épanouissement polaire 109a. Ce plan est désigné par la référence A' et sa trace dans le plan de la figure 6 est partiellement indiquée par une ligne en traits mixtes. Lorsque le rotor 18 est dans l'une ou l'autre de ses deux positions de repos, l'axe d'aimantation 18b de son aimant 18a est donc situé dans ce plan A'.

On appellera arbitrairement première position de repos du rotor 18 celle dans laquelle l'axe d'aimantation 18b est dirigé vers le point diamétralement opposé au milieu de l'épanouissement polaire 109a comme cela est représenté à la figure 6. De même, on appellera deuxième position de repos du rotor 18 celle où cet axe d'aimantation 18b est dirigé vers le milieu de cet épanouissement polaire 109a.

De manière similaire, les encoches qui constituent, dans cet exemple, les moyens de positionnement du rotor 21 sont symétriques l'une de l'autre par rapport à un plan qui contient l'axe 108a de l'ouverture 108 et qui passe par le milieu de l'épanouissement polaire 120a. Ce plan est désigné par la référence D', et sa trace dans le plan de la figure 6 est indiquée partiellement par une ligne en traits mixtes. Lorsque le rotor 21 est dans l'une ou l'autre de ses deux positions de repos, l'axe d'aimantation 21b de son aimant 21 est donc situé dans ce plan D'.

On appellera arbitrairement première position de repos du rotor 21 celle dans laquelle l'axe d'aimantation 21b est dirigé vers le point diamétralement opposé au milieu de l'épanouissement polaire 120a, comme cela est représenté à la figure 6. De même, on appellera deuxième position de repos de ce rotor 21 celle dans laquelle cet axe d'aimantation 21b est dirigé vers le milieu de l'épanouissement polaire 120a.

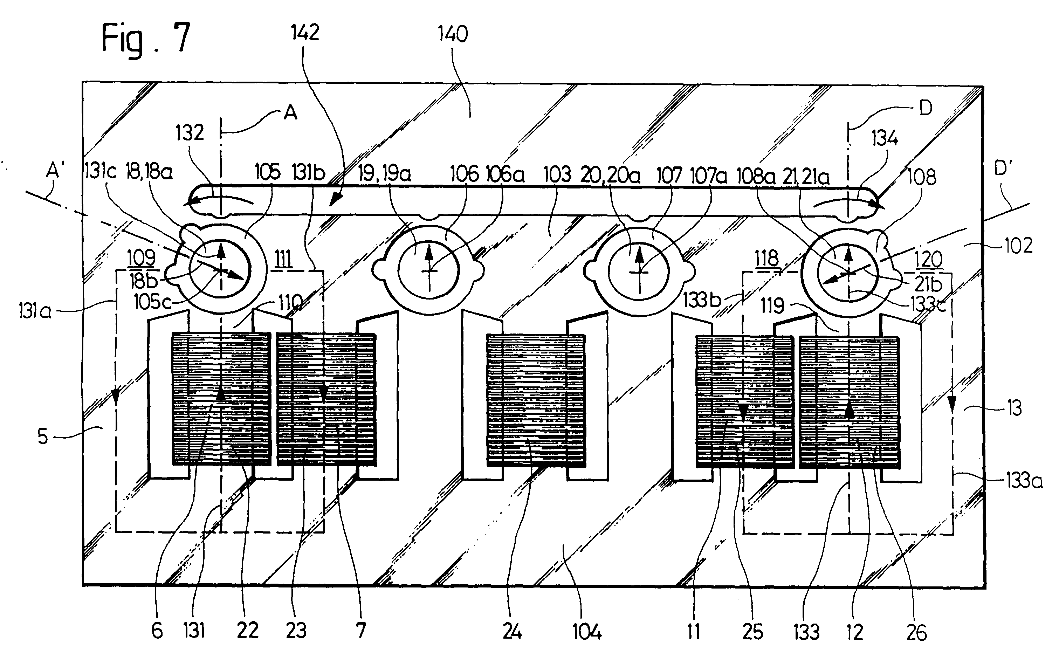

Un courant circulant dans la bobine 22 du transducteur 101 induit dans la partie transversale 6 un champ magnétique 131 dont la résultante est représentée schématiquement dans la figure 7 par une ligne en traits interrompus.

Le champ 131 passe par le pôle statorique 110 et pénètre dans l'ouverture 105 où il se sépare en deux parties 131a et 131b. La partie 131a du champ 131 sort de l'ouverture 105 par le pôle statorique 109 et rejoint la partie transversale 6 en passant par la partie transversale 5 et par une portion de la partie principale 104. La partie 131b du champ 131 sort de l'ouverture 105 par le pôle statorique 111 et rejoint la partie transversale 6 en passant par la partie transversale 7 et par une portion de la partie principale 104.

La résultante de ce champ 131 dans l'ouverture 105 et dans l'aimant 18a, qui est désignée par la référence 131c, est située dans le plan de symétrie A de l'ouverture 105.

Lorsque le circuit de commande du transducteur 101 applique à la bobine 22 une impulsion motrice positive, le champ 131 a le sens indiqué par les flèches portées par la ligne en traits interrompus qui le symbolise.

Si le rotor 18 est dans sa première position de repos, il est alors soumis à un couple qui le fait tourner dans le sens de la flèche 132, c'est à dire le sens positif. A la fin de cette impulsion motrice positive, le rotor 18 atteint donc sa deuxième position de repos après avoir tourné de 180° dans le sens positif.

Si le circuit de commande du transducteur 101 applique alors une impulsion motrice négative à la bobine 22, le rotor 18 tourne à nouveau de 180° dans le sens positif et se retrouve dans sa première position de repos à la fin de cette impulsion motrice.

On voit donc que des impulsions motrices de polarités alternées appliquées à la bobine 22 provoquent la rotation du rotor 18 dans le sens positif par pas de 180°.

Pour des raison similaires à celles qui ont été données dans le cas illustré par la figure 2, les impulsions motrices appliquées à la bobine 22 comme cela vient d'être décrit n'ont aucune influence sur le rotor 19 ni, bien entendu, sur les rotors 20 et 21.

Le champ magnétique induit dans la partie transversale 7 par un courant circulant dans la bobine 23 suit exactement le même circuit que le champ 53 décrit dans le cas illustré par la figure 3. Ce circuit ne sera donc pas décrit à nouveau ici.

Comme dans ce cas illustré par la figure 3, des impulsions motrices de polarités alternées appliquées à la bobine 23 du transducteur 101 font tourner le rotor 19 dans le sens négatif.

Cependant, la résultante dans l'ouverture 105 du champ induit dans la partie transversale 7 en réponse à ces impulsions motrices fait aussi un angle obtus avec le plan A' dans lequel est situé l'axe d'aimantation 18b de l'aimant 18a lorsque le rotor 18 est dans l'une ou l'autre de ses deux positions de repos. Le rotor 18 peut donc aussi tourner dans le sens négatif en réponse à ces impulsions motrices appliquées à la bobine 23.

Si l'on désire que le rotor 19 soit le seul à tourner en réponse à ces impulsions motrices, il faut donc que le circuit de commande du transducteur 101 applique aussi à la bobine 22 des impulsions de compensation en phase avec ces impulsions motrices, comme dans le cas illustré par la figure 3.

On voit facilement, par analogie avec ce qui a été décrit ci-dessus, que si le circuit de commande du transducteur 101 applique des impulsions motrices de polarités alternées à la bobine 24, le rotor 20 tourne dans le sens négatif. En outre, si ce rotor 20 doit être seul à tourner, le circuit de commande du transducteur 101 doit appliquer aux bobines 22 et 23 des impulsions de compensation en phase avec ces impulsions motrices appliquées à la bobine 24.

On voit également que si le circuit de commande du transducteur 101 applique des impulsions motrices de polarités alternées à la bobine 25, le rotor 21 tourne dans le sens positif et que, si ce rotor 21 doit être le seul à tourner, le circuit de commande du transducteur 101 doit appliquer aux bobines 22, 23 et 24 des impulsions de compensation en phase avec ces impulsions motrices appliquées à la bobine 25.

Un courant circulant dans la bobine 26 du transducteur 101 induit dans la partie transversale 12 un champ magnétique 133 dont la résultante est aussi représentée schématiquement dans la figure 7 par une ligne en traits interrompus.

Le champ 133 passe par le pôle statorique 119 et pénètre dans l'ouverture 108 où il se sépare en deux parties 133a et 133b. La partie 133a du champ 133 sort de l'ouverture 108 par le pôle statorique 120 et rejoint la partie transversale 12 en passant par la partie transversale 13 et par une portion de la partie principale 104. La partie 133b du champ 133 sort de l'ouverture 108 par le pôle statorique 118 et rejoint la partie transversale 12 en passant par la partie transversale 11 et par une portion de la partie principale 104.

La résultante du champ 133 dans l'ouverture 108 et dans l'aimant 21a, qui est désignée par la référence 133c, est située dans le plan de symétrie D de l'ouverture 108.

Lorsque le circuit de commande du transducteur 101 applique à la bobine 26 une impulsion motrice positive, le champ 133 a le sens indiqué par les flèches portées par la ligne en traits interrompus qui le symbolise.

Si le rotor 21 est alors dans sa première position de repos, il est soumis à un couple qui le fait tourner dans le sens de la flèche 134, c'est à dire le sens négatif. A la fin de cette impulsion motrice, le rotor 21 atteint donc sa deuxième position de repos après avoir tourné de 180° dans le sens négatif.

Si le circuit de commande du transducteur 101 applique alors une impulsion motrice négative à la bobine 26, le rotor 21 tourne à nouveau de 180° dans le sens négatif et se retrouve dans sa première position de repos à la fin de cette impulsion motrice.

On voit donc que des impulsions motrices de polarités alternées appliquées à la bobine 26 provoquent la rotation du rotor 21 dans le sens négatif par pas de 180°.

Pour des raisons similaires à celles qui ont été données dans le cas illustré par la figure 2, les impulsions motrices appliquées à la bobine 26 comme cela vient d'être décrit n'ont aucune influence sur le rotor 20 ni sur les rotors 18 et 19.

La manière de commander le transducteur 101 pour que les rotors 19 et 20 tournent dans le sens positif et pour que le rotor 18 tourne dans le sens négatif ne sera pas décrite en détail ici car elle se déduit facilement des explications données ci-dessus.

Il faut noter que, dans une variante du transducteur 101, seule l'une des bobines 22 et 26 est disposée sur la partie transversale de rang pair 6 ou 12 respective, l'autre de ces deux bobines 22 et 26 étant alors disposée sur la partie transversale de rang impair 5 ou 13 respective, comme elle l'est dans les exemples des figures 1 et 5.

En outre, une ou plusieurs des ouvertures 105 à 108 peuvent également être ménagées dans la deuxième partie principale 104 du stator 102.

Dans un tel cas, le sens de rotation de chaque rotor situé dans l'une de ces ouvertures ménagées dans la deuxième partie principale 104 est l'inverse de celui qu'il a dans l'exemple décrit ci-dessus.

De nombreuses modifications peuvent être apportées au transducteur électromécanique dont diverses formes d'exécution ont été décrites ci-dessus, sans pour autant sortir du cadre de la présente invention.

Notamment, le stator d'un transducteur selon la présente invention peut comporter un nombre d'ouvertures diffèrent de quatre, ce nombre pouvant être quelconque mais égal ou supérieur à deux.

D'une manière tout à fait générale, si on désigne par N le nombre d'ouvertures ménagées dans l'une ou l'autre des deux parties principales du stator d'un tel transducteur, ce nombre N étant alors aussi bien entendu le nombre des rotors de ce transducteur, ce dernier comporte alors (N+1) bobines et son stator comporte (2N+1) parties transversales dont N sont de rang pair et (N+1) sont de rang impair. Chacune des N ouvertures est ménagée dans le prolongement de l'une des N parties transversales de rang pair.

Comme cela a été fait ci-dessus pour les parties transversales, on peut attribuer un rang à chacune des N ouvertures ménagées dans le stator du transducteur, et donc aux N rotors traversant ces ouvertures.

Ainsi, on attribuera le rang un à l'ouverture la plus proche de la première extrémité du transducteur. Cette ouverture est celle qui est ménagée dans le prolongement de la partie transversale ayant le rang pair le plus faible, c'est à dire le rang deux. Ce même rang un est bien entendu également attribué au rotor traversant cette ouverture de rang un. Le rang deux sera attribué à l'ouverture ménagée dans le prolongement de la partie transversale de rang quatre, c'est à dire la deuxième partie transversale de rang pair, et ainsi de suite, le cas échéant, jusqu'au rang N qui sera attribué à l'ouverture la plus proche de la deuxième extrémité du stator, c'est à dire celle qui est ménagée dans le prolongement de la Nième partie transversale de rang pair. Les rangs deux à N seront évidemment aussi respectivement attribués aux rotors traversant ces ouvertures de rang deux à N.

Dans tous les exemples décrits ci-dessus à l'aide des figures 1, 5 et 6, les rotors 18 à 21 sont donc respectivement les rotors de rang un à quatre.

On peut aussi attribuer de la même manière un rang à chacune des (N+1) bobines du transducteur. Le rang un est ainsi attribué à la bobine située le plus près de la première extrémité du stator de ce transducteur, le rang deux à la suivante, et ainsi de suite jusqu'à la bobine située le plus près de la deuxième extrémité du stator, à laquelle est attribué le rang (N+1).

Dans tous les exemples décrits ci-dessus, les bobines 22 à 26 ont donc respectivement les rangs un à cinq.

Il faut encore noter que, dans toutes les formes d'exécution du transducteur selon la présente invention, chaque rotor est entouré par trois épanouissements polaires situés respectivement à l'extrémité de trois pôles statoriques. Deux de ces pôles statoriques sont reliés directement chacun à une partie transversale constituant le noyau d'une bobine, et le troisième pôle statorique est relié directement à une partie transversale ne portant pas de bobine.

En outre, les moyens de positionnement des rotors sont toujours agencés de manière que ces derniers aient deux positions de repos et que, dans chacune de ces deux positions de repos, la direction de l'axe d'aimantation de leur aimant passe par le milieu de l'épanouissement polaire situé à l'extrémité du troisième pôle statorique qui vient d'être mentionné.

Le procédé de commande d'un transducteur selon la présente invention tel qu'il a été défini ci-dessus peut alors être résumé de la manière suivante :

Pour faire tourner dans son premier sens un rotor de rang i, avec 1 ≤ i ≤ N, le circuit de commande du transducteur applique des impulsions motrices de polarités alternées à la bobine ayant le même rang i. Si i > 1 et si ce rotor de rang i doit être le seul à tourner, le circuit de commande applique en outre à chaque bobine de rang inférieur à i des impulsions de compensation en phase avec les impulsions motrices appliquées à la bobine de rang i.

Pour faire tourner le rotor de rang i dans son deuxième sens, le circuit de commande du transducteur applique des impulsions motrices de polarités alternées à la bobine de rang (i + 1). Si i < N et si ce rotor de rang i doit être le seul à tourner, le circuit de commande applique en outre à chaque bobine de rang supérieur à (i + 1) des impulsions de compensation en phase avec des impulsions motrices appliquées à la bobine de rang (i + 1).

Il faut noter que le premier sens de rotation d'un rotor peut être le sens négatif ou le sens positif selon la disposition des divers éléments du transducteur, la position du rotor dans ce transducteur, et l'extrémité du stator qui est choisie comme première extrémité dans l'attribution d'un rang à ce rotor.

En d'autres termes, le premier sens de rotation d'un rotor peut être, par exemple, le sens positif, alors que le premier sens de rotation d'un autre rotor du même transducteur est le sens négatif.

Parmi toutes les modifications qui peuvent aussi être apportées aux transducteurs décrits ci-dessus, on mentionnera encore celle qui consiste à donner à son stator une forme générale différente de celle qui a été représentée dans les figures 1 à 7. On voit facilement que cette forme générale peut être quelconque, et même que les diverses parties de ce stator peuvent être situées dans des plans différents qui peuvent être parallèles entre eux ou non.

On mentionnera également celle qui consiste à faire en sorte que les angles au centre sur lesquels s'étendent les deux épanouissements polaires principaux entourant partiellement l'une ou l'autre des ouvertures ménagées dans le stator d'un transducteur selon la présente invention ne soient pas égaux comme c'est le cas dans les exemples ci-dessus.

## Revendications

1. Transducteur électromécanique comportant :
- un stator (2; 72; 102) dans lequel sont ménagées N ouvertures sensiblement cylindriques (14 à 17; 75 à 78; 105 à 108) définissant chacune un axe central (14a à 17a; 75a à 78a; 105a à 108a), N étant un nombre entier quelconque supérieur à deux;
- une pluralité de bobines (22 à 26); et
- N rotors (18 à 21) traversant chacun l'une des ouvertures (14 à 17; 75 à 78; 105 à 108), chaque rotor ayant un axe de rotation confondu avec l'axe central (14a à 17a; 75a à 78a; 105a à 108a) de l'ouverture qu'il traverse, et comprenant un aimant permanent bipolaire (18a à 21a) situé dans cette ouverture et ayant un axe d'aimantation (18b à 21b) perpendiculaire à cet axe de rotation;
caractérisé par le fait que :
- le stator (2; 72; 102) comporte deux parties principales (3, 4; 73, 74; 103, 104), ayant chacune deux extrémités, et 2N + 1 parties transversales (5 à 13) présentant chacune deux extrémités couplées magnétiquement à l'une et, respectivement, à l'autre des deux parties principales (3, 4; 73, 74; 103, 104), les 2N + 1 parties transversales (5 à 13) ayant chacune un rang donné allant de 1 à 2N + 1;
- chacune des N ouvertures (14 à 17; 75 à 78; 105 à 108) est ménagée dans l'une ou l'autre des parties principales (3, 4; 73, 74; 103, 104), dans le prolongement de l'une des parties transversales de rang pair (6, 8, 10, 12), et est entourée par trois pôles statoriques (27 à 38; 79 à 90; 109 à 120) terminés chacun par un épanouissement polaire (27a à 38a; 79a à 90a; 109a à 120a), deux de ces pôles statoriques étant constitués par des portions de cette partie principale (3, 4; 73, 74; 103, 104) et le troisième de ces pôles statoriques étant constitué par une portion de ladite partie transversale respective de rang pair (6, 8, 10, 12), les N ouvertures (14 à 17; 75 à 78; 105 à 108) ayant chacune un rang allant de 1 à N, et chacun des N rotors (18 à 21) ayant un rang égal à celui de l'ouverture qu'il traverse;
- la pluralité de bobines (22 à 26) comporte N + 1 bobines entourant chacune une partie transversale (5 à 13) différente et ayant chacune un rang allant de 1 à N + 1, la bobine de rang 1 entourant l'une des parties transversales de rang 1 ou de rang 2, la bobine de rang N + 1 entourant l'une des parties transversales de rang 2N ou de rang 2N + 1, et les autres bobines entourant chacune l'une des autres parties transversales de rang impair.

2. Transducteur électromécanique selon la revendication 1, caractérisé par le fait que les N ouvertures (14 à 17; 105 à 108) sont toutes ménagées dans la même 1ère partie principale (3; 103).

3. Transducteur électromécanique selon la revendication 1, caractérisé par le fait qu'au moins une des ouvertures (75, 77) est ménagée dans l'une des parties principales (73) et au moins une autre ouverture (76, 78) est ménagée dans l'autre partie principale (74).

4. Transducteur électromécanique selon l'une des revendications 1 à 3, caractérisé en ce que lesdites deux parties principales et les parties transversales ne portant pas de bobine forment ensemble une seule et même pièce.

5. Transducteur électromécanique selon l'une des revendications 1 à 4, caractérisé par le fait que la bobine de rang 1 entoure la partie transversale de rang 2 et la bobine de rang N+1 entoure la partie transversale de rang 2N.

6. Transducteur électromécanique selon l'une des revendications précédentes, comportant en outre des moyens de positionnement des rotors (18 à 21) agencés de manière que chaque rotor ait deux positions de repos dans chacune desquelles l'axe d'aimantation de son aimant permanent est situé dans un plan contenant son axe de rotation et passant sensiblement par le milieu de l'épanouissement polaire qui termine celui des trois pôles statoriques, entourant l'ouverture traversée par ce rotor, qui est relié directement à une partie transversale ne portant pas de bobine.

7. Procédé de commande d'un transducteur électromécanique selon la revendication 1, caractérisé par le fait qu'il consiste :
- à appliquer des impulsions motrices de polarités alternées à la bobine de rang i, avec 1 ≤ i ≤ N, pour faire tourner le rotor de rang i dans son premier sens de rotation, et conjointement à appliquer des impulsions de compensation en phase avec ces impulsions motrices à chaque bobine de rang inférieur à i si i est supérieur à un;
- à appliquer des impulsions motrices de polarités alternées à la bobine de rang i + 1 pour faire tourner ce rotor de rang i dans son deuxième sens de rotation, et conjointement à appliquer des impulsions de compensation en phase avec ces impulsions motrices à chaque bobine de rang supérieur à i + 1 si i est inférieur à N.

8. Procédé de commande selon la revendication 7, caractérisé par le fait qu'il est prévu, lorsque des impulsions motrices sont appliquées à la bobine de rang i pour faire tourner le rotor de rang i dans son premier sens, d'appliquer des impulsions de compensation en phase avec ces impulsions motrices à chaque bobine de rang inférieur à i si i est supérieur à un, et, lorsque des impulsions motrices sont appliquées à la bobine de rang (i + 1) pour faire tourner le rotor de rang i dans son deuxième sens, d'appliquer des impulsions de compensation en phase avec ces impulsions motrices à chaque bobine de rang supérieur à i si i est inférieur à N.

9. Transducteur électromécanique comportant un stator dans lequel sont ménagées deux ouvertures, deux rotors ayant chacun un aimant permanent bipolaire situé respectivement dans une des deux ouvertures, et trois bobines; ledit stator comportant deux parties principales et cinq parties transversales ayant chacune un rang donné allant de 1 à 5 et présentant chacune deux extrémités couplées magnétiquement à l'une et, respectivement, à l'autre des deux parties principales, les deux ouvertures étant ménagées dans l'une des parties principales, respectivement dans le prolongement des parties transversales de rang 2 et 4; ce transducteur étant caractérisé en ce que les trois bobines entourent respectivement les parties transversales de rang 2, 3 et 5.

10. Transducteur électromécanique comportant un stator dans lequel sont ménagées deux ouvertures, deux rotors ayant chacun un aimant permanent bipolaire situé respectivement dans une des deux ouvertures, et trois bobines; ledit stator comportant deux parties principales et cinq parties transversales ayant chacune un rang donné allant de 1 à 5 et présentant chacune deux extrémités couplées magnétiquement à l'une et, respectivement, à l'autre des deux parties principales, les deux ouvertures étant ménagées dans l'une des parties principales, respectivement dans le prolongement des parties transversales de rang 2 et 4; ce transducteur étant caractérisé en ce que les trois bobines entourent respectivement les parties transversales de rang 2, 3 et 4.

11. Transducteur électromécanique selon la revendication 9 ou 10, caractérisé en ce que la première partie principale dans laquelle sont ménagées les deux ouvertures présente deux extrémités reliées, d'une part, à la deuxième partie principale respectivement par les parties transversales de rang 1 et 5 et, d'autre part, directement l'une à l'autre par une troisième partie principale du stator qui définit avec ladite première partie principale une ouverture dans la structure magnétique du stator.

12. Transducteur électromécanique comportant un stator dans lequel sont ménagées deux ouvertures, deux rotors ayant chacun un aimant permanent bipolaire situé respectivement dans une des deux ouvertures, et trois bobines; ledit stator comportant deux parties principales et cinq parties transversales ayant chacune un rang donné allant de 1 à 5 et présentant chacune deux extrémités couplées magnétiquement à l'une et, respectivement, à l'autre des deux parties principales, caractérisé en ce que les deux ouvertures sont ménagées respectivement dans l'une et dans l'autre des deux parties principales.

13. Transducteur électromécanique selon la revendication 12, caractérisé en ce que les trois bobines entourent respectivement les parties transversales de rang 2, 3 et 5.

14. Transducteur électromécanique selon la revendication 12, caractérisé en ce que les trois bobines entourent respectivement les parties transversales de rang 2, 3 et 4.

15. Transducteur électromécanique selon la revendication 2, caractérisé en ce que la première partie principale dans laquelle sont ménagées les N ouvertures présente deux extrémités reliées, d'une part, à la deuxième partie principale respectivement par les parties transversales de rang 1 et 2N+1 et, d'autre part, directement l'une à l'autre par une troisième partie principale du stator qui définit avec ladite première partie principale une ouverture dans la structure magnétique du stator.

## Patentansprüche

1. Elektromechanischer Meßwandler, mit:
- einem Stator (2; 72; 102), in dem N im wesentlichen zylindrische Öffnungen (14 bis 17; 75 bis 78; 105 bis 108) ausgebildet sind, die jeweils eine Mittelachse (14a bis 17a; 75a bis 78a; 105a bis 108a) definieren, wobei N eine beliebige ganze Zahl größer als zwei ist;
- eine Vielzahl von Spulen (22 bis 26); und
- N Rotoren (18 bis 21), die jeweils durch eine der Öffnungen (14 bis 17; 75 bis 78; 105 bis 108) verlaufen, wobei jeder Rotor eine Drehachse, die mit der Mittelachse (14a bis 17a; 75a bis 78a; 105a bis 108a) der Öffnung, durch die er verläuft, zusammenfällt, und einen bipolaren Permanentmagneten (18a bis 21a) aufweist, der sich in dieser Öffnung befindet und eine Magnetisierungsachse (18b bis 21b) besitzt, die zu dieser Drehachse senkrecht ist;
dadurch gekennzeichnet, daß:
- der Stator (2; 72; 102) zwei Hauptteile (3, 4; 73, 74; 103, 104), wovon jedes zwei Enden besitzt, sowie 2N + 1 transversale Teile (5 bis 13), wovon jedes zwei Enden aufweist, die mit dem einen bzw. mit dem anderen der beiden Hauptteile (3, 4; 73, 74; 103, 104) magnetisch gekoppelt sind, umfaßt, wobei die 2N + 1 transversalen Teile (5 bis 13) jeweils einen gegebenen Rang im Bereich von 1 bis 2N + 1 besitzen;
- jede der N Öffnungen (14 bis 17; 75 bis 78; 105 bis 108) in dem einen oder dem anderen der Hauptteile (3, 4; 73, 74; 103, 104) in der Verlängerung eines der transversalen Teile mit geradzahligem Rang (6, 8, 10, 12) ausgebildet ist und von drei Statorpolen (27 bis 38; 79 bis 90; 109 bis 120) umgeben ist, die jeweils in einer polaren Aufspreizung (27a bis 38a; 79a bis 90a; 109a bis 120a) enden, wobei zwei dieser Statorpole durch Abschnitte dieses Hauptteils (3, 4; 73, 74; 103, 104) gebildet sind und der dritte dieser Statorpole durch einen Abschnitt des jeweiligen transversalen Teils mit geradzahligem Rang (6, 8, 10, 12) gebildet ist, wobei die N Öffnungen (14 bis 17; 75 bis 78; 105 bis 108) jeweils einen Rang im Bereich von 1 bis N besitzen und wobei jeder der N Rotoren (18 bis 21) einen Rang besitzt, der gleich demjenigen der Öffnung ist, durch die er verläuft;
- die Vielzahl von Spulen (22 bis 26) N + 1 Spulen umfassen, die jeweils einen anderen transversalen Teil (5 bis 13) umgeben und jeweils einen Rang im Bereich von 1 bis N + 1 besitzen, wobei die Spule mit Rang 1 einen der transversalen Teile mit Rang 1 oder Rang 2 umgibt, die Spule mit Rang N + 1 einen der transversalen Teile mit Rang 2N oder mit Rang 2N + 1 umgibt und die anderen Spulen jeweils einen der transversalen Teile mit ungeradzahligem Rang umgeben.

2. Elektromechanischer Meßwandler nach Anspruch 1, dadurch gekennzeichnet, daß die N Öffnungen (14 bis 17; 105 bis 108) alle in demselben ersten Hauptteil (3; 103) ausgebildet sind.

3. Elektromechanischer Meßwandler nach Anspruch 1, dadurch gekennzeichnet, daß wenigstens eine der Öffnungen (75 bis 77) in einem der Hauptteile (73) ausgebildet ist und wenigstens eine weitere Öffnung (76, 78) im anderen Hauptteil (74) ausgebildet ist.

4. Elektromechanischer Meßwandler nach einem der Ansprüche 1 bis 3, dadurch gekennzeichnet, daß die beiden Hauptteile und die transversalen Teile, die keine Spule tragen, gemeinsam ein und dasselbe Teil bilden.

5. Elektromechanischer Meßwandler nach einem der Ansprüche 1 bis 4, dadurch gekennzeichnet, daß die Spule mit Rang 1 den transversalen Teil mit Rang 2 umgibt und die Spule mit Rang N + 1 den transversalen Teil mit Rang 2N umgibt.

6. Elektromechanischer Meßwandler nach einem der vorangehenden Ansprüche, ferner mit Mitteln zum Positionieren der Rotoren (18 bis 21), die in der Weise angeordnet sind, daß jeder Rotor zwei Ruhepositionen besitzt, wobei sich in jeder von ihnen die Magnetisierungsachse seines Permanentmagneten in einer Ebene befindet, die seine Drehachse enthält und im wesentlichen durch die Mitte der polaren Aufspreizung verläuft, in der derjenige der drei die von diesem Rotor durchlaufene Öffnung umgebenden Statorpole endet, der direkt mit einem keine Spule tragenden transversalen Teil verbunden ist.

7. Verfahren zum Steuern eines elektromechanischen Meßwandlers nach Anspruch 1, dadurch gekennzeichnet, daß es darin besteht:
- Antriebsimpulse mit wechselnder Polarität an die Spule mit Rang i, mit 1 ≤ i ≤ N, anzulegen, um den Rotor mit Rang i in seiner ersten Drehrichtung zu drehen, und an jede Spule mit Rang kleiner als i, falls i größer als eins ist, Impulse zur Kompensation der Phase der Antriebsimpulse anzulegen;
- Antriebsimpulse mit wechselnder Polarität an die Spule mit Rang i + 1 anzulegen, um diesen Rotor mit Rang i in seiner zweiten Drehrichtung zu drehen, und an jede Spule mit Rang größer als i + 1, falls i kleiner als N ist, Impulse zur Kompensation der Phase dieser Antriebsimpulse anzulegen.

8. Steuerverfahren nach Anspruch 7, dadurch gekennzeichnet, daß vorgesehen ist, dann, wenn Antriebsimpulse an die Spule mit Rang i angelegt werden, um den Rotor mit Rang i in seiner ersten Richtung zu drehen, Impulse zur Kompensation der Phase dieser Antriebsimpulse an jede Spule mit Rang kleiner als i, falls i größer als eins ist, anzulegen, und dann, wenn Antriebsimpulse an die Spule mit Rang (i + 1) angelegt werden, um den Rotor mit Rang i in seiner zweiten Richtung zu drehen, Impulse zur Kompensation der Phase dieser Antriebsimpulse an jede Spule mit Rang größer als i, falls i kleiner als N ist, anzulegen.

9. Elektromechanischer Meßwandler, mit einem Stator, in dem zwei Öffnungen ausgebildet sind, zwei Rotoren, wovon jeder einen bipolaren Permanentmagneten besitzt, der sich in einer entsprechenden der beiden Öffnungen befindet, und drei Spulen; wobei der Stator zwei Hauptteile und fünf transversale Teile, wovon jeder einen gegebenen Rang im Bereich von 1 bis 5 besitzt und jeweils zwei Enden aufweist, die mit dem einen bzw. mit dem anderen der beiden Hauptteile magnetisch gekoppelt sind, umfaßt, wobei die beiden Öffnungen in einem der Hauptteile in der Verlängerung der transversalen Teile mit Rang 2 bzw. 4 ausgebildet sind; wobei dieser Meßwandler dadurch gekennzeichnet ist, daß die drei Spulen die transversalen Teile mit Rang 2, 3 bzw. 5 umgeben.

10. Elektromechanischer Meßwandler, mit einem Stator, in dem zwei Öffnungen ausgebildet sind, zwei Rotoren, wovon jeder einen bipolaren Permanentmagneten besitzt, der sich in einer entsprechenden der beiden Öffnungen befindet, und drei Spulen; wobei der Stator zwei Hauptteile und fünf transversale Teile, wovon jeder einen gegebenen Rang im Bereich von 1 bis 5 besitzt und jeweils zwei Enden aufweist, die mit dem einen bzw. mit dem anderen der beiden Hauptteile magnetisch gekoppelt sind, umfaßt, wobei die beiden Öffnungen in einem der Hauptteile in der Verlängerung der transversalen Teile mit Rang 2 bzw. 4 ausgebildet sind; wobei dieser Meßwandler dadurch gekennzeichnet ist, daß die drei Spulen die transversalen Teile mit Rang 2, 3 bzw. 4 umgeben.

11. Elektromechanischer Meßwandler nach Anspruch 9 oder 10, dadurch gekennzeichnet, daß der erste Hauptteil, in dem die beiden Öffnungen ausgebildet sind, zwei Enden aufweist, die einerseits über die transversalen Teile mit Rang 1 bzw. 5 mit dem zweiten Hauptteil und andererseits über einen dritten Hauptteil des Stators, der mit dem ersten Hauptteil in der magnetischen Struktur des Stators eine Öffnung definiert, miteinander verbunden sind.

12. Elektromechanischer Meßwandler, mit einem Stator, in dem zwei Öffnungen ausgebildet sind, zwei Rotoren, wovon jeder einen bipolaren Permanentmagneten besitzt, der sich in einer entsprechenden der beiden Öffnungen befindet, und drei Spulen; wobei der Stator zwei Hauptteile und fünf transversale Teile, wovon jeder einen gegebenen Rang von 1 bis 5 besitzt und jeweils zwei Enden aufweist, die mit dem einen bzw. dem anderen der beiden Hauptteile magnetisch gekoppelt sind, umfaßt, dadurch gekennzeichnet, daß die beiden Öffnungen in dem einen bzw. dem anderen der beiden Hauptteile ausgebildet sind.

13. Elektromagnetischer Meßwandler nach Anspruch 12, dadurch gekennzeichnet, daß die drei Spulen die transversalen Teile mit Rang 2, 3 bzw. 5 umgeben.

14. Elektromagnetischer Meßwandler nach Anspruch 12, dadurch gekennzeichnet, daß die drei Spulen die transversalen Teile mit Rang 2, 3 bzw. 4 umgeben.

15. Elektromechanischer Meßwandler nach Anspruch 2, dadurch gekennzeichnet, daß der erste Hauptteil, in dem die N Öffnungen ausgebildet sind, zwei Enden aufweist, die einerseits über die transversalen Teile mit Rang 1 bzw. 2N + 1 mit dem zweiten Hauptteil und andererseits über einen dritten Hauptteil des Stators, der mit dem ersten Hauptteil eine Öffnung in der magnetischen Struktur des Stators definiert, direkt miteinander verbunden sind.

## Claims

1. Electromechanical transducer comprising :
- a stator (2; 72; 102) wherein are arranged N substantially cylindrical openings (14 to 17; 75 to 78; 105 to 108) each defining a central axis (14a to 17a; 75a to 78a; 105a to 108a), N being any number greater than two;
- a plurality of coils (22 to 26); and
- N rotors (18 to 21) each passing through one of the openings (14 to 17; 75 to 78; 105 to 108), each rotor having an identical axis of rotation to the central axis (14a to 17a; 75a to 78a; 105a to 108a) of the opening through which it passes, and comprising a bipolar permanent magnet (18a to 21a) situated in such opening and having a magnetisation axis (18b to 21b) perpendicular to such axis of rotation;
characterized in that :
- the stator (2; 72; 102) comprises two main parts (3, 4; 73, 74; 103, 104) each having two ends, and 2N + 1 transverse parts (5 to 13) each having two ends magnetically coupled respectively to one and the other main parts (3, 4; 73, 74; 103, 104), the 2N + 1 transverse parts (5 to 13) each having a determined rank going from 1 to 2N + 1;
- each of the N openings (14 to 17; 75 to 78; 105 to 108) is arranged in one or the other of the main parts (3, 4; 73, 74; 103, 104) in the prolongation of one of the even rank transverse parts (6, 8, 10, 12) and is surrounded by three stator poles (27 to 38; 79 to 90; 109 to 120) each ending in a polar expansion (27a to 38a; 79a to 90a; 109a to 120a), two of such stator poles being formed by portions of such main part (3, 4; 73, 74; 103; 104) and the third of such stator poles being formed by a portion of said respective even rank transverse part (6, 8, 10, 12), the N openings (14 to 17; 75 to 78; 105 to 108) each having a rank going from 1 to N, and each of the N rotors (18 to 21) having a rank equal to that of the opening through which it passes;
- the plurality of coils (22 to 26) comprises N + 1 coils each surrounding a different transverse part (5 to 13) and each having a rank going from 1 to N + 1, the coil of rank 1 surrounding one of the transverse parts of rank 1 or rank 2, the coil of rank N + 1 surrounding one of the transverse parts of rank 2N or 2N + 1, and the other coils each surrounding one of the other odd rank transverse parts.

2. Electromechanical transducer according to claim 1, characterized in that the N openings (14 to 17; 105 to 108) are all arranged in the same first main part (3; 103).

3. Electromechanical transducer according to claim 1, characterized in that at least one of the openings (75, 77) is arranged in one of the main parts (73) and at least one other opening (76, 78) is arranged in the other main part (74).

4. Electromechanical transducer according to one of claims 1 to 3, characterized in that said two main parts and the transverse parts not carrying a coil form together a single and same piece.

5. Electromechanical transducer according to one of claims 1 to 4, characterized in that the coil of rank 1 surrounds the transverse part of rank 2 and the coil of rank N+1 surrounds the transverse part of rank 2N.

6. Electromechanical transducer according to one of the preceding claims, further comprising means for positioning the rotors (18 to 21) arranged in such a way that each rotor has two rest positions in each of which the magnetisation axis of its permanent magnet is situated in a plane containing its axis of rotation and substantially passing through the middle of the polar expansion which ends the one of the three stator poles, surrounding the opening through which such rotor passes, which is directly connected to a transverse part not carrying a coil.

7. Method for controlling an electromechanical transducer according to claim 1, characterized in that it consists of:
- applying driving pulses of alternate polarity to the coil of rank i, with 1 ≤ i ≤ N, in order to cause the rotor of rank i to rotate in its first direction of rotation, and concomitantly applying compensation pulses in phase with these driving pulses to each coil of lower rank than i, if i is greater than 1;
- applying driving pulses of alternate polarity to the coil of rank i + 1 in order to cause such rotor of rank i to rotate in its second direction of rotation, and concomitantly applying compensation pulses in phase with these driving pulses to each coil of a higher rank if i + 1 is less than N.

8. Control method according to claim 7, characterized in that, when driving pulses are applied to the coil of rank i in order to cause the rotor of rank i to rotate in its first direction, compensation pulses in phase with said driving pulses are applied to each coil of lower rank than i if i is higher than one, and, when driving pulses are applied to the coil of rank (i + 1) in order to cause the rotor of rank i to rotate in its second direction, compensation pulses in phase with said driving pulses are applied to each coil of higher rank than i if i is less than N.

9. Electromechanical transducer comprising a stator wherein two openings are arranged, two rotors each having a bipolar permanent magnet situated respectively in one of the two openings, and three coils; said stator including two main parts and five transverse parts each having a rank going from 1 to 5 and each having deux ends magnetically coupled to one and, respectively, to the other of the two main parts, the two openings being arranged in one of the main parts, respectively in line with the two transverse parts of rank 2 to 4; such transducer being characterized in that the three coils surround respectively the transverse parts of rank 2, 3 and 5.

10. Electromechanical transducer comprising a stator wherein two openings are arranged, two rotors each having a bipolar permanent magnet situated respectively in one of the two openings, and three coils; said stator including two main parts and five transverse parts each having a rank going from 1 to 5 and each having deux ends magnetically coupled to one and, respectively, to the other of the two main parts, the two openings being arranged in one of the main parts, respectively in line with the two transverse parts of rank 2 to 4; such transducer being characterized in that the three coils surround respectively the transverse parts of rank 2, 3 and 4.

11. Electromechanical transducer according to claim 9 or 10, characterized in that the first main part wherein the two openings are arranged has two ends connected, on the one hand, to the second main part respectively by the transverse parts of rank 1 to 5 and, on the other hand, directly one to the other by a third main part of the stator which defines with said first main part an opening in the magnetical structure of the stator.

12. Electromechanical transducer comprising a stator wherein two openings are arranged, two rotors each having a bipolar permanent magnet situated respectively in one of the two openings, and three coils; said stator including two main parts and five transverse parts each having a rank going from 1 to 5 and each having two ends magnetically coupled to one and, respectively, to the other of the two main parts, characterized in that the two openings are arranged respectively in one and in the other of the two main parts.

13. Electromechanical transducer according to claim 12, characterized in that the three coils surround respectively the transverse parts of rank 2, 3 and 5.

14. Electromechanical transducer according to claim 12, characterized in that the three coils surround respectively the transverse parts of rank 2, 3 and 4.

15. Electromechanical transducer according to claim 2, characterized in that the first main part wherein the N openings are arranged has two ends connected, on the one hand, to the second main part respectively by the transverse parts of rank 1 and 2N+1 and, on the other hand, directly one to the other by the third main part of the stator which defines with said first main part an opening in the magnetical structure of the stator.
